# EUROPEAN PATENT APPLICATION

(11) **EP 2 998 940 A1**
(43) Date of publication of application: **23.03.2016**
(21) Application number: 15185973.3
(22) Date of filing: 18.09.2015
(51) Int. Cl.: G07C 9/00, B62H 5/00, E05B 71/00, G07F 17/00

(54) **A METHOD FOR HIRING VEHICLES DURING A USER-DEFINED TIME FRAME, AND A LOCK SYSTEM FOR HIRING OF VEHICLES**

(30) Priority: 19.09.2014 NL 2013502
(71) Applicant: Skopei holding IP and Brands B.V., 2628 RX Delft (NL)
(72) Inventor: Jacobs, Niels Antonius Aleida, 2628 RX Delft (NL); de Lange, Jan Willem, 2628 RX Delft (NL)
(74) Representative: van Essen, Peter Augustinus

(57) **Abstract**

The invention provides a method for providing a user authorization allowing operating a lock selected from a series of locks during user-defined time window, said method comprising providing a series of locks, and a first remote computer system, wherein a user upon entering a request and a time window into said first remote computer system receives an authentication code, and upon entering said authentication code into a selected lock from said series of lock is enabled to operate said lock during said time window. The invention further provides a lock system operating according to said method.

## Description

### Field of the invention

The invention relates to a method for hiring vehicles during a time window by providing a user authorization allowing operating a lock selected from a series of locks, a lock system, and software for performing the method steps or for use in such a system.

### Background of the invention

NL2000149 describes according to its abstract a lock, in particular a mobile lock like a bicycle lock, comprising a housing and at least partially included in the housing a latch part and a blocking device, wherein the blocking device is adapted for in particular blocking or releasing of motion of the latch part with respect to the housing for opening or closing the lock. The lock is provided with means, preferably comprising a toothed bar and a generator, which are adapted for generating electrical power by the user when operating the lock. The latch part and the operating lever are to that end at least in the lock state of the lock uncoupled to one another. A key is provided with transmission means for transmitting at least on key identification code for operating the a remotely controllable lock en is provided with a motion sensor for activating the transmission means. Such a lock thus requires a physical key.

Other locks are known that require a keycode to be transmitted between a lock and remote authorisation means in order to allow operation of the lock, or that require other communication between a lock and remote authorisation means.

EP1304636, for instance, describes "a rental system for [a] movable body such as a vehicle". According to the abstract, it is a movable body management system which can appropriately calculate a movable body fee according to availability etc. and flexibly and effectively allow movable bodies to be used. Each of vehicles such as cars and bicycles has a GPS capability to detect a current position of its own at a specified time interval. The system transmits information indicating the detected current position to an operating company for managing current positions of respective vehicles. When each of vehicles such as bicycles is rented out to a member and is used, the system star[t]s measuring a traveling distance and a traveling time. When the use of the vehicle ends, the system transmits the measured traveling distance and traveling time to a server apparatus in the operating company. The operating company's server apparatus calculates the fee for settlement according to the transmitted traveling distance and traveling time. This system requires almost constant (wireless) linking to a management system.

US20130043973 describes according to its abstract an electronic lock, system and method for dynamic controlled access, without the lock communicating with or connected to a code server. The lock includes a locking mechanism, a clock, a microprocessor, and a memory storing a hash function and programmed instructions for the microprocessor to perform certain operations. The microprocessor and memory may be comprised in a microcontroller. When an access code is entered into the lock, the lock microcontroller hashes currently valid access start date/duration combinations with lock identifying data to return valid access codes. If the entered access code equals any of the valid access codes, the locking mechanism is opened. The lock identifying data may include data stored by a lock manufacturer and/or data created by a lock owner. Static access codes may also be programmed into the lock if desired. Caching of valid access codes may be used to reduce processing time.

### Summary of the invention

It is an aspect of the invention to provide an alternative lock or lock system that may be used next to or complementary to or in addition to known systems. More in particular, it is an aspect of the invention to provide a method and a lock system that allows easier authentication, allowing hiring of vehicles.

The invention thus provides a method according to claim 1.

The invention further provides a lock system of claim 11.

The method and lock system does not require a physical key. Furthermore, the lock or lock system does not require data transmission, in particular in the form of a key code or authorisation, between a lock and a remote authorization system or management system. The lock system and method facilitates for instance management of moveable rental objects, like vehicles. The system and/or method provide a secure system that can be operational for a longer period of time without interference of humans. The system and method can be secure, but easy to operate from a user perspective, the user being in this case a person operating and/or using the lock.

In fact, the lock system allows for instance easy, mainly unattended rental/hiring of assets. Examples of assets are bikes, cars, houses, and the like. In particular, assets that are displaceable are suitable for the current invention. In particular, bikes, motorcycles, e-bikes, even cars, end the like.

The lock system in particular relates to a physical lock. Most of these physical locks comprise a locking element like a latch or a locking bolt. In an embodiment, such a locking element is coupled to a handle or similar part that allows the locking element to be hand-operated. In this way, the lock is even less dependent on electrical power. The lock comprises an actuator that blocks motion of the locking element. In an embodiment, such locking element can be blocked in both its locking position and its unlocking position by the actuator.

In the application, reference is made first remote computer system. This may be a server. Such a server may be one server device, for instance a computer device, located at a location. Alternatively, a server may refer to at least one server device, connected via one or more data connections, at the same location and/or located at remote, in particular physically/geographically remote locations. Each separate server may run part of the system. For instance, one of the databases may run on a separate, even a physically or geographically remote, server device.

The first computer system is remote. This implies being physically and geographically remote from the lock(s).

A commonly used form of communication connection is a data connection, which is a coupling allowing data, in particular digital data, to be transferred between devices, in particular computer devices or devices comprising a data processor. The data connection can comprise one or more parts that can functionally coupled to one another to transfer data from one device to another. Such a connection may comprises wired (including optical wiring, for instance) parts, but may also comprise wireless parts. Coupling between devices, including servers and satellites of the current invention, may be completely wired, partly wired, or may be completely wireless. Data connections in general are known to a skilled person. The data can be transferred via said data connection via a variety of known protocols.

In an embodiment, the locks comprise a return code, wherein for returning the vehicle within said time window, said user brings said locking means into its locking position, enters said return code into said input device, and enters said authorization code into said input device, wherein said lock computer based upon said authorization code issues said authorization to said actuator for blocking said locking means in its locking position. The return code may be provided by the first remote computer upon request by the user. The return code may also be included in the lock computer or in the memory of the lock. It allows the user to return an asset earlier, before the end of the time window. In an embodiment, the return code is identical for all locks. For instance, the user first enters "999" before entering the authorization code.

In an embodiment, the method comprising provides said series of locks, each lock comprising a lock computer comprising a lock identifier, and a lock time identifier, and said lock further comprising a data input device, operationally coupled to said lock computer, for entering the authorization code into said lock computer, said lock computer functionally coupled to an actuator comprising a locking position and unlocked position and comprising a lock computer program comprising an algorithm for evaluating an authorization using said authorization code, said lock identifier, and said lock time identifier, and to issue an authorization to said actuator.

In an embodiment, the first remote computer system comprising a communication device for allowing said user to enter said time window, a time identifier correlated with said lock time identifier of each of said lock computers of said series of locks, a memory holding said lock identifiers of said series of locks and a computer program comprising an algorithm for generating an authorization code based upon said time identifier, said lock identifier and said time window.

In an embodiment, said method further comprises entering said time window into said first remote computer system.

In an embodiment, said first remote computer system evaluating said authorization code and communicating said authorization code to said user.

In an embodiment, the method further comprises entering said authorization code via said lock input device in said lock computer.

In an embodiment, said lock computer runs said lock computer program for evaluating said authorization, and based upon said authorization actuating said actuator from said locked position into said unlocked position.

In an embodiment of the method on said selected lock, after entering the authorization code via said data input device, said user enters a user code, said user code for allowing the user to operate the lock during the time window upon inputting the user code via the data input device.

In an embodiment the first remote computer system further communicates the lock identifier to said user.

In an embodiment said series of locks each have a unique lock identifier, and said first remote computer system comprising a database comprising the lock identifiers of said locks, and geographical location data indicating a current geographical location of each of said locks. In particular, said first remote computer system updates said current location at least once a day. More in particular said locks transmit their current location to said first remote computer system, it updates the current location of each lock based upon said at least once a day, and said first remote computer system updates said current location in said database based upon said transmitted current location. This allows accurate administration of assets, in particular their location. It allows the administration with a minimized amount of data transmission and/or power usage. Furthermore, a users device, like a mobile device, smartphone, or the like, may also be used for relaying data between lock(s) and first remote computer system. For instance, locks may transfer data to the mobile device, and the mobile device send the data to the first remote computer. Thus, for instance, a lock may transfer to a proximate mobile device, and the mobile device may transfer over a large distance, thus saving energy. The lock or first remote computer device thus in an embodiment functionally uses the mobile device as a router device.

In an embodiment the first remote computer system comprising a database comprising the lock identifier and a geographical location of each lock. The geographical location may be a fixed geographical location. For instance, the fixed location may be a rental site. Alternatively, a GPS location or the like may be logged by the lock and transmitted periodically, or when a data connection is present. As lock identifier, for instance a MAC address, IMEI or the like may be used.

In an embodiment the lock comprises a lock housing comprising a visually discernable identification mark representative of said lock identifier. This allows the user to find the specific lock, and the asset associated with the lock.

In an embodiment the first remote computer system comprises a one-time password generator for generating said authentication code. In a further embodiment said lock or series of locks each comprise a one-time password verifier functionally coupled with the one-time password generator. In particular the one-time password verifier is coupled via said lock time identifier and said time identifier. The one-time password generator allows authorization protocols which may require a minimal to no data transmission from a lock, and thus a minimal power requirement. Thus, remote and unattended rental sites may for instance be provided.

In an embodiment the lock computer contacts said first remote computer system for synchronisation of said time at an event selected from at least once in a time window and the availability of a wireless internet connection. In particular said time window is between 4 and 24 hours. In an embodiment, said time window is larger than 8 hours. For bike rental application, the time window allows minimal data transmission and power consumption.

In an embodiment the first remote computer system provides said authentication code as a one-time password, in particular a one-time password based upon one or more shared secrets. For instance a shared secret shared with the series of locks or at least one shared secret shared with one lock, and based upon an event that changes as a function of time. In particular said event comprising said time identifier, said time window and said lock identifier. In an embodiment, the password is valid during the time window. It may lose its validity outside the time window.

In an embodiment the user further enters a geographical area or geographical location into said first remote computer system, and said first remote computer system selects a one or more available locks in the user-entered area or location. In particular, the locks comprise a lock housing comprising a visually discernable identification mark representative of and/or coupled with said lock identifier, and said first remote computer system transmits said identification mark to said user. Thus, minimal or unattended rental may be possible. Furthermore, proper administration and reservation of assets linked to a lock may be possible.

In an embodiment the series of locks are vehicle locks. In particular, the locks are bicycle locks. Using the locks, and for instance an "app" or other software running on a remote, for instance portable device like a smartphone or tablet, a vehicle rental system can be implemented that does not require handing out physical keys. It may allow a user to select a vehicle at or near a chosen geographical location, during a time window. The user then receives an authentication code and for instance a vehicle location at or close by the selected location. The software may even guide the user to the vehicle. The user then enters the authentication code using for instance a keypad on the lock. The authentication code may also be communicated to the lock for instance wirelessly via or through a device carried by the user. In an embodiment, the user's device send a random code to the lock. The lock hashes that random code, transmits the result back to the user's device, that in turn send the result to the remote computer device which recognises that the results originates from the lock, and even which particular lock. The remote computer device may then send an authorisation code to the user's device, which in turn sends it to the lock for authorisation and allowing operation of the lock during the time window.

The user may define his own user code allowing the user to unlock on demand upon entering the user code during the time window. The use of a mobile device give the user freedom to arrange the rental of use of an asset element on the spot, for instance rental of a bike, or even a car, a boat, of other vehicle.

In an embodiment the locks comprise a locking means and a blocking element for blocking the locking element, said blocking element comprises said actuator functionally coupled to the lock computer. In particular, when said authentication code or a user code is entered via said data input device, said lock computer issues an authorization to said actuator for releasing said blocking means for allowing operation of said locking element.

In an embodiment, each time a user wants to operate the lock (lock and/or unlock it), the user needs to provide a user input to the lock. For instance, the user should push a button. Thus, a lock (in fact, of course, the lock computer) can check if operation is within the allowed time window.

In an embodiment of the lock system, the lock system comprises a series of said locks, each lock comprising a unique lock identifier.

In am embodiment. The lock system further comprises a first remote computer system comprising a first computer program product which, when running on said first remote computer system, comprising an algorithm for generating an authorization code based upon said time identifier, said lock identifier, said shared secret code, and said time window. In particular, said first computer program product, when running on said first remote computer system, performs reading a input time window, evaluating said authorization code, and communicating said authorization code to said user.

In an embodiment, the lock system further comprises a second computer program product running on a remote, portable device of a user, said second computer program allowing said user to indicate a geographical location and a time window, and allowing contacting and providing said geographical location and said time window to said first remote computer system, and receiving from said first computer system an authentication code and a lock identifier allowing the user to identify a selected lock from a series of lock.

In an embodiment, said lock or series of locks each comprise a one-way password verifier for verifying said authentication code.

In an embodiment, said first remote computer lock or series of locks comprise a one-way password generator for generating said authentication code.

The use of one-way passwords reduces the need for lock and remote computer to communicate extensively. This again reduces power consumption, data transmission. It further may reduce the risk of hacking.

In an embodiment, the lock computer program product after receiving and evaluating said authentication code allows the user to insert a user code via said data input device, stores said user code, and when further data is input in said data input device, evaluates said authentication based using said user code and said time window, for allowing said user to operate said lock during said time window upon inputting of said user code. A user may define his own user code that may be used to allow operation of the lock after the first authorisation. The user code can be used during the defined time window. Thus, the lock becomes even more autonomous and requires little power and little or no data communication to an outside or remote computer system. Furthermore, in increases safety against hacking or other external interference.

In an embodiment, the lock comprises a power source inside said housing, operationally coupled to said lock computer and to said actuator. The power source can be a (rechargeable) battery. The lock, in case it is coupled to a vehicle having an electrical power source, may also be coupled to that power source.

The invention further relates to a bicycle lock, comprising a lock of said method or the lock system.

The user may in an embodiment also return the asset within the time window. This may also be used when the asset does not function properly, or when a user may want another asset from the series of assets. To that end, the user may enter a return code into the lock in combination with the authentication code. In an embodiment, in order to allow entering the return code, the user should first lock the lock. When locked and when the return code is entered, for instance followed by or preceded by the authentication code, the lock will be set into a "returned asset mode". In an embodiment, the actual time window of use may be determined and/or stored into the lock. The lock may then contact the server, sending its lock code and the actual time window. It may at the same time send an indication that the current authentication code is not valid any more. Thus, a limited amount of data needs to be transmitted. If needed, the lock may also transmits its current location. The data may be relayed via a user device in order to further save energy.

The lock system may also be used in other assets, for instance assets with a fixed location, like houses and the like. The lock system may advantageously be used in moveable assets, like vehicles. An example is rental of vehicles, like cars, boats, motor cycles, and the like. Also other relatively expensive assets may be secured in this way, and provided for use during a time window.

The invention further relates to a data carrier provided with said computer program described above.

The invention further relates to a signal carrying at least part of said computer program described above.

The invention further relates to a signal sequence representing a program for being executed on a computer, said signal sequence representing said computer program product described above.

A one-time password can be generated by a one-time password generator and be verified by a one-time password verifier. A method for producing and using a one-time password is for instance described in WO2007/126763. This method and system and similar method and systems, known to a person skilled in the art of one-time password systems and methods, may be applied in the lock system, lock and method of the current invention. The document specifically describes generating an HOTP value. The server of the current system may hold a one-time password generator, and the lock may comprise a one-time password verifier. The one-time password is valid for a predefined time window. The verifier (incorporated in the lock) may use the one-time password together with the time window in order to verify and authenticate. More one-time password systems and algorithms, known to a skilled person in that field, may be used and combined.

The invention further pertains to a data carrier provided with this computer program.

The invention further pertains to a signal carrying at least part of this computer program.

The invention further pertains to a signal sequence representing a program for being executed on a computer, said signal sequence representing this computer program.

The invention further relates to a method for providing a user authorization allowing operating a lock selected from a series of locks during said user-defined time window, said method comprising providing said series of locks and a first remote computer system, wherein said user upon entering said time window into said first remote computer system receives an authentication code, and upon entering said authentication code into said selected lock from said series of locks is enabled to operate said lock during said time window.

The invention further relates to a lock system comprising a lock comprising a housing, a lock computer in said housing, comprising a lock time identifier, a lock identifier, and a shared secret code, a data input device on or in said housing and functionally coupled to said lock computer, a locking means, manually moveable into a locking position and an unlocking position, an actuator, functionally coupled to said lock computer and having a block position for blocking said locking means and an unlock position for releasing said locking means for allowing manually moving said locking means, said lock computer comprising a lock computer program product which, when running on said a first remote device, performs receiving an authentication code from said data input device, evaluates an authorization using said authentication code, a lock time, a lock identifier and a shared secret code, and provides an authorization to said actuator for going to said unlock position.

This method and/or system can be combined with any of the features of the current description.

The term "substantially" herein, like in "substantially consists", will be understood by and clear to a person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally", when used for instance in "functionally coupled" or "functionally direct communication", will be understood by, and be clear to, a person skilled in the art. The term "substantially" may also include embodiments with "entirely", "completely", "all", etc. Hence, in embodiments the adjective substantially may also be removed. Thus, for instance "functionally direct communication" comprises direct, live communication. It may also comprise communication that, from a perspective of the parties communication, is experienced as "live". Thus, like for instance VOIP, there may be a small amount of time between various data packages comprising digital voice data, but these amounts of time are so small that for users it seems as if there is an open communication line or telephone line available.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 shows a perspective view of an embodiment of the invention, implemented in a bicycle lock;
figure 2 shows the lock of figure 1 in perspective view from an other side;
figure 3 shows the lock of figures 1 and 2 in an exploded view;
figure 4 shows the lock of figures 1-3 open from above.

The drawings are not necessarily on scale.

### Description of preferred embodiments

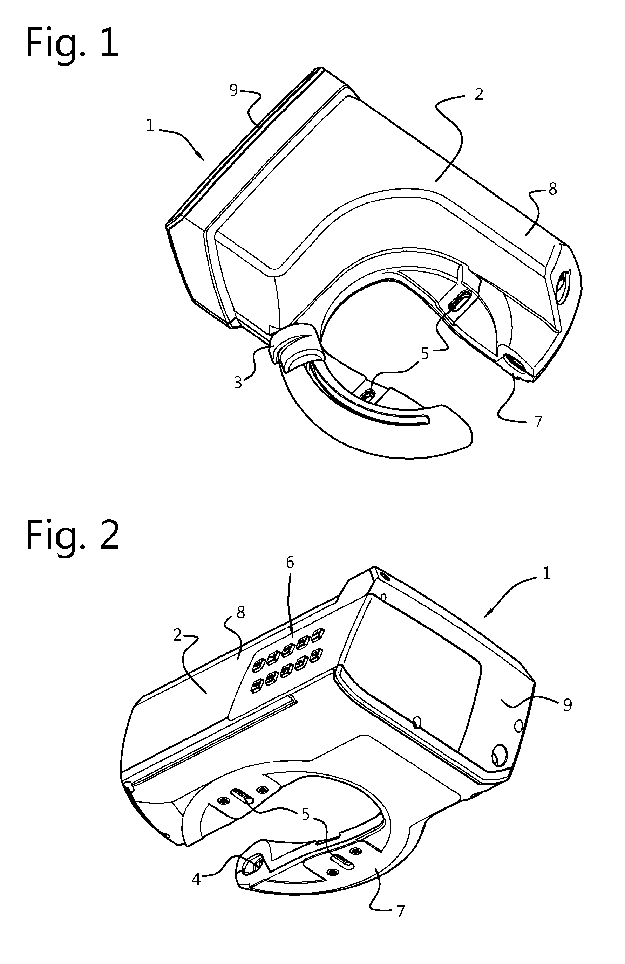

Figures 1-4 show the lock system implemented in a bicycle lock. Such a lock, or a similar lock, may also be applied and/or adapted for e-bikes, motorcycles, or other vehicles. For instance in bicycle rental situations, it is very beneficial if there is no physical key that needs to be handed out when a vehicle is rented.

It is explained above, and will be explained in more detail below, how a user can make a reservation, gets a time-stamped code key (i.e., a code that can be entered into for instance a keypad and that provides a key to allow unlocking of the lock), and enters the code key into the physical lock. The lock then internally checks the code key and allows unlocking. To that end, the lock does not need a wireless transmission to verify the authenticity of the code key.

Some of the exterior elements of the lock will first be discussed based on figures 1 and 2. In this embodiment, the (physical) lock 1 is based upon a commonly known ring-lock 10 used for locking bicycles. The lock 1 has an outer housing 2, a handle 3 for allowing manual operation of a locking element or bolt 4 (not visible in figure 1). In this embodiment, the lock 1 comprises attachment parts 5 for attaching the lock 1 to a vehicle.

In the current embodiment, the lock has data entry means in the form of a keypad 6, shown in figure 2. As may be evident, other data entry means are possible, and as such known in the art. Again, this keypad 6 allows data entry without requiring substantial (relative) amounts of electrical power from the lock. Wireless transmission of data are certainly possible. This, however, requires continuous scanning from the side of the lock 1 if data is going to be transmitted. An "old-fashioned" keypad can be robust against vandalism and other abuse. It can be operated with a minimal amount of electrical power. Here, the keypad is incorporated in a side-surface (when the lock 1 is mounted) of the lock, for minimising exposure to weather conditions and rain.

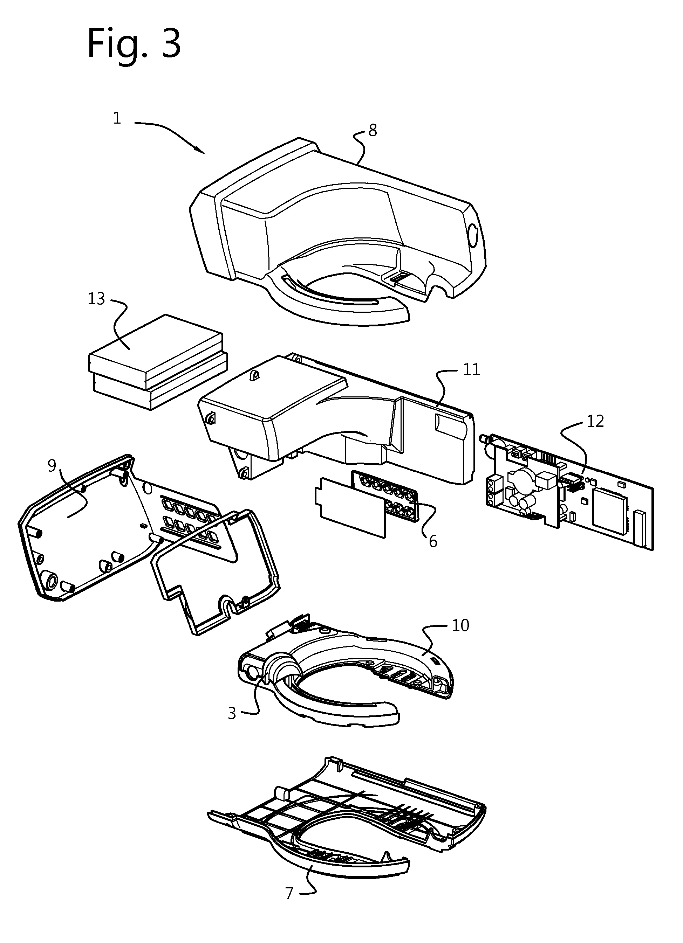

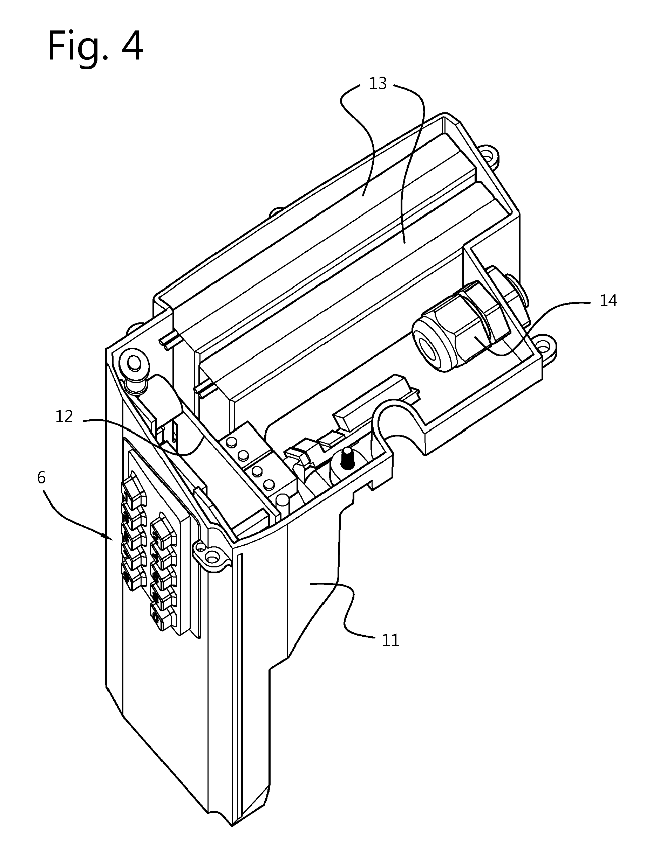

In figures 3 and 4, the interior of the current embodiment of the physical lock 1 is shown. This embodiment is particularly designed for vehicles for providing and facilitating for instance rental of a vehicle.

Here, the housing 2 has several housing parts, here a back housing part 7, a front housing part 8 and an upper housing part 9. These housing parts are easily manufactured, assembled, and provide resistance against all sorts of physical influences.

In this embodiment, the housing 2 houses a modified, key-less bicycle lock 10. This bicycle lock 10 comprises the locking element or bolt 4 and handle 3 for manually operating the locking element 4. The lock 1 here further comprises a separate housing 11 for the control means 12. The control means 12 here comprises an electronic board with a processor running software for operating the authentication and providing actuation signals. In this embodiment, the control means 12 further comprises transmission means for communicating data to outside the housing and to the outside world. Communication may be wired, or wireless. In order to save power, fixed instances may be selected, for instance several times a day. In case possibilities for data communication are available, data like location, local time, a lock identifier, and key code may be transmitted to a management system. Thus, again electrical power can be saved. In this embodiment, the lock is further provided with a power means 13, here a battery 13, inside the separate housing 11.

In figure 4 it is further shown that the housing 2 may comprise a power lead 14 allowing a power and/or data cable to enter the housing 2. Thus, for instance when a vehicle is parked or placed at a rental site, the power means 13 may be charged or data may be synchronised between the control means 12 and a management system.

In an embodiment, the method and lock system of the current invention allow use of an asset, in particular one or more selected asset belonging to a group of assets. The group of assets may comprise unique asset elements, or non-unique asset elements. One of such groups of assets are rental bikes, for instance. At first, for a user, the asset elements may be non-unique. For instance, the user want to rent "a bike" at a defined location and time window. The server than may make a reservation for an asset element from the group. The user then goes to the specific location, and selects an asset element. For instance, again, the user selects a specific bike. The user then sends a lock code to the server, and the server returns an authentication code for that asset element (in fact, a lock associated with the asset element). The user can then use that authentication code for operating that specific lock and thus that specific asset element.

The use of the asset can be managed without needing personal presence at the location or locations where the asset of assets are located. In the example of rental bikes, series of bikes can be located at various locations. A user can take a bike and does not require a physical key to be able to operate its lock. The user may be allowed, after authentication using his or her authentication code, to enter a personal operation code that may be used during the time window. When entering the operation code, a person can operate the lock, i.e., for instance unlock the lock. Alternatively, the lock may generate an operation code and provide the operation code to the user. In an embodiment, the lock comprises a display showing the operation code. Alternatively, the operation code is also transmitted the user via the server to for instance a device carried by the user, like a smartphone, smartwatch, tablet, or the like. In an embodiment, the lock may even transmit its operation code directly to the user of the device of the user. For instance when the user is near the asset or near the lock. The user may indicate the set of assets het wants to be able to select from, a subset of assets, for instance assets located at a selected location. In a basic embodiment, the user needs to enter the authentication code for operating the lock. Entering the authentication code may for instance allows a computer or data processor to operate or instruct an actuator. The actuator may take its unlock position, allowing the user to operate a bolt.

The user may in an embodiment also return the asset within the time window. This may also be used when the asset does not function properly, or when a user may want another asset from the series of assets. To that end, the user may enter a return code into the lock in combination with the authentication code. The lock will then be set into a "returned asset mode", and the actual time window of use will be determined and/or stored into the lock. The lock may then contact the server, sending its lock code and the actual time window. Thus, a limited amount of data needs to be transmitted. If needed, the lock may also transmits its current location. Data transmission may also take place when a data connection to a server is or becomes available.

In an embodiment, when receiving an authentication code, it may be possible to verify the identity of a user. Alternatively, a guarantee sum of money may be placed at a deposit or may be paid, for instance before the authentication code is provided to the user. This guarantee sum may be returned after returning the asset, or when the lock returns the authentication code and/or the actual time window. Using the actual time window, a user may be billed or his bill may be settled. Thus, a user pays for the actual use of the asset.

In an embodiment, the user may receive his authentication code when the time window starts.

In an embodiment, the user may sent to the server, together with a time window, a lock code. For instance, when at a rental site the user already selected a specific bike. The server than returns an authentication code. Thus, a user is allowed to select an actual, selected asset from the series of assets.

Using modern server implementations for instance using cloud computing, it is evident that a server can be modular, and/or distributed. Thus, at least one of the computer program and the database may also be distributed.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

## Claims

1. A method for hiring vehicles during a time window, comprising providing a user authorization allowing operating a lock (1) selected from a series of locks during a user-defined time window, said method comprising providing said series of locks and a first remote computer system, wherein said user upon entering said time window into said first remote computer system receives an authentication code, and upon entering said authentication code into said selected lock (1) from said series of locks is enabled to operate said lock during said time window,
said method further comprises:
- providing each vehicle with one of said locks;
- providing each lock of said series of locks with
a lock computer (12) comprising a lock identifier, a lock time identifier, and a shared secret code, and providing each of said locks further with a data input device (6), operationally coupled to said lock computer (12), for entering the authorization code into said lock computer, said lock computer functionally coupled to an actuator and comprising a lock computer program comprising an algorithm for evaluating an authorization using said authorization code, said lock identifier, said shared secret code and said lock time identifier, and to issue said authorization to said actuator;
- providing each lock (1) further with:
a locking means (10, 4) having a locking position and an unlocking position, and wherein when said authentication code is entered via said data input device (6) and said locking means (10, 4) is in its locking position, said lock computer issues an authorization to said actuator for allowing operation of said locking means from said locking position to said unlocking position, and when said locking means is in its unlocking position and an input is provided to said input device, said locking computer issues an authorization to said actuator for allowing operation of said locking means from said unlocking position to said locking position;
- providing said first remote computer system with:
a communication device for allowing said user to enter said time window, with a time identifier correlated with said lock time identifier of each of said lock computers of said series of locks, with said shared secret code, with a memory holding said lock identifiers of said series of locks and a computer program comprising an algorithm for generating an authorization code based upon said time identifier, said lock identifier, said time window, and said shared secret code, said method further comprising:
- entering said time window into said first remote computer system;
- said first remote computer system producing said authorization code and communicating said authorization code to said user;
- entering said authorization code via said lock input device in said lock computer;
- said lock computer running said lock computer program for evaluating said authorization using said shared secret code, and based upon said authorization actuating said actuator for allowing operation of said locking means (10, 4) from said locking position into said unlocking position.

2. The method of claim 1, wherein said locks comprise a return code, wherein for returning the vehicle within said time window, said user brings said locking means into its locking position, enters said return code into said input device, and enters said authorization code into said input device, wherein said lock computer based upon said authorization code issues said authorization to said actuator for blocking said locking means in its locking position.

3. The method of claim 1 or 2, wherein on said selected lock, after entering the authorization code via said data input device, said user enters a user code, said user code for allowing the user to operate the lock during the time window upon inputting the user code via the data input device.

4. The method of any one of the preceding claims, wherein the first remote computer system further communicates the lock identifier to said user.

5. The method of any one of the preceding claims, wherein said series of locks each have a unique lock identifier, and said first remote computer system comprising a database comprising the lock identifiers of said locks, and geographical location data indicating a geographical location of each of said locks, in particular said first remote computer system updates said geographical location at least once a day, more in particular said locks transmit their geographical location to said first remote computer system at least once a day, and said first remote computer system updates said geographical location in said database based upon said transmitted geographical location.

6. The method of any one of the preceding claims, wherein said locks comprises a lock housing comprising a visually discernable identification mark representative of said lock identifier.

7. The method of any one of the preceding claims, wherein said first remote computer system comprises a one-time password generator for generating said authentication code, and said series of locks each comprise a one-time password verifier functionally coupled with the one-time password generator, in particular coupled via said lock time identifier and said time identifier.

8. The method of any one of the preceding claims, wherein said lock computer contacts said first remote computer system for synchronisation of said lock time identifier at an event selected from at least once in said time window and the availability of a wireless internet connection, in particular wherein said time window is larger than 8 hours.

9. The method of any one of the preceding claims, wherein said first remote computer system provides said authentication code as a one-time password, in particular a one-time password based upon one or more shared secrets, for instance a shared secret shared with the series of locks or at least one shared secret shared with one lock, and based upon an event that changes as a function of time, wherein in particular said event comprising said time identifier, said time window and said lock identifier.

10. The method of any one of the preceding claims, wherein said user further enters a geographical area or geographical location into said first remote computer system, and said first remote computer system selects a one or more available locks in the user-entered area or location, wherein in particular said locks comprise a lock housing comprising a visually discernable identification mark representative of and/or coupled with said lock identifier, and said first remote computer system transmits said identification mark to said user.

11. A lock system for allowing hiring of vehicles, said lock system comprising a series of locks (1) and a first remote computer system remote from said series of locks, each vehicle provided with at least one of said locks, each lock (1) comprising:
- a housing (7, 8, 9, 11);
- a lock computer (12) in said housing, comprising a lock time identifier, a unique lock identifier, and a shared secret code;
- a data input device (6) on or in said housing and functionally coupled to said lock computer (12);
- a locking means (10, 4, 3), manually moveable into a locking position and an unlocking position;
- an actuator, functionally coupled to said lock computer and having a block position for blocking said locking means and an unlock position for releasing said locking means for allowing manually moving said locking means between a locking position and an unlocking position;
- said lock computer (12) comprising a lock computer program product which, when running on said lock computer, performs receiving an authentication code from said data input device, evaluates an authorization using said authentication code, a lock time, a lock identifier and said shared secret code, and provides an authorization to said actuator for going to said unlock position, and
said first remote computer system comprising:
- a first computer program product which, when running on said first remote computer system, comprising an algorithm for generating an authorization code based upon said time identifier, said lock identifier, said shared secret code, and said time window,
said first computer program product, when running on said first remote computer system, performs:
- reading a input time window;
- generating said authorization code, and
- communicating said authorization code to said user.

12. The lock system of claim 11, further comprising:
- a second computer program product running on a remote, portable device of a user, said second computer program allowing said user to indicate a geographical location and a time window, and allowing contacting and providing said geographical location and said time window to said first remote computer system, and receiving from said first computer system an authentication code and a lock identifier allowing the user to identify a selected lock from a series of lock.

13. The lock system of any one of the preceding claims 11 or 12, wherein at least one selected from said lock, series of locks, and said first remote computer comprises a one-way password verifier for verifying and/or generating said authentication code.
